# EUROPEAN PATENT APPLICATION

(11) **EP 2 692 582 A1**
(43) Date of publication of application: **05.02.2014**
(21) Application number: 13178640.2
(22) Date of filing: 30.07.2013
(51) Int. Cl.: B60P 1/64, B60P 1/36

(54) **Container trailer assembly**

(30) Priority: 30.07.2012 NL 2009253
(71) Applicant: Inlicence B.V., 7909 HG Hoogeveen (NL)
(72) Inventor: Hofstra, Anne Arjen, 7909 HG Hoogeveen (NL); Hogervorst, Wouter Hendrick, 7908 WB Hoogeveen (NL)
(74) Representative: van Essen, Peter Augustinus

(57) **Abstract**

Trailer assembly for transport of a container (2), the trailer comprising a tipping frame (4) connected to a trailer frame (6) with a hinge element (8) at a rear zone of the trailer frame (6). A tipping actuator (10) is connected to the trailer frame (6) and the tipping frame (4) for tilting the tipping frame (4) between a horizontal position and an inclined position. The tipping frame (4) comprises a conveyor system (12a) for moving the container (2) along a length of the tipping frame (4). The conveyor system (12a) comprises a load bearing surface (16) positioned above an upper surface of the tipping frame (4), the load bearing surface (16) being arranged at a fixed position along a predetermined length at the rear zone of the tipping frame (4) and being arranged to convey the container (2) while under load without bending in a load direction.

## Description

### Field of the invention

The present invention relates to a trailer assembly for hauling containers, such as sea containers. More particularly, the present invention relates to a trailer assembly for transport of a container, the trailer comprising a trailer frame, a tipping frame connected to the trailer frame with a hinge element at a rear zone of the trailer frame, and a tipping actuator connected to the trailer frame and the tipping frame for tilting the tipping frame between a horizontal position and an inclined position, the tipping frame comprising a conveyor system for moving the container along a length of the tipping frame.

### Prior art

WO 2010/041946 discloses a trailer for the transportation by road of cargo, such as containers. The trailer comprises a trailer frame, a tipping frame and lifting means which act on the trailer frame and the tipping frame in order to lift the front side of the tipping frame with respect to the trailer frame. The tipping frame extends along the trailer frame and is fastened, in the rear zone, to the trailer frame so as to hinge about a tipping axis. The trailer frame comprises a front zone arranged for coupling to a tractor unit and which is provided with a coupling member in order to effect coupling. The trailer frame also has a rear zone comprising e.g. three sets of wheels. An intermediate zone connects the front zone to the rear zone. The trailer further comprises a loading frame which provides a support plane for a container and which is slidable along said tipping frame. This allows to load and unload containers from the trailer without the use of an additional lifting or hoisting installation. The above prior art trailer for the transportation by road of cargo, such as containers, suffers from a limited movement of the loading frame with respect to the tipping frame, due to the dimensions of the loading frame and the resulting limited possible movement of the container when loaded. As a result, a trailer operator is required to actively monitor the displacement of the loading frame in order to prevent the loading frame from colliding with a front part or a rear part of the trailer.

United States patent publication US-A-4,081,094 discloses a conveyor trailer for transporting an agricultural commodity. The conveyor trailer is pivotally mounted on the bed of a truck and moveable between a horizontal and inclined position. A chain system with chains and longitudinally spaced flight attachments allows to load or unload cotton onto the conveyor trailer. In the inclined position, the chains are linked to the trailer wheels using a servo mechanism so that the conveyor is driven at a speed commensurate with the speed of rotation of the trailer wheels. The construction as disclosed in this document is not sufficient for handling heavy cargo, such as a container, as the chains only acts as a pulling element.

US 5941676 describes a trailer that 'comprises a horizontal shaft which is connected to a coupling head at the lower front angles of the container, through conventional pins. The axis or shaft remains anchored through a traction cable or chain, and is driven by way of telescopic hydraulic cylinders situated along the rocking body or in the cradle of the trailer. The traction cable or chain passes over various return-pulleys and remains anchored at its extremities to respective fixing points of the chassis. The axis or shaft has fixed extremities, a central movable portion and a pair of intermediate rollers bearing on the rolling tracks of the cradle or rocking chassis. There are also provided small wheels which are situated on the other side of the rolling tracks. The container bears posteriorly on a table of rollers and optionally on a pair of side rows of rollers which are displaceable vertically through the action of hydraulic cylinders.'

### Summary of the invention

The present invention seeks to provide an improved trailer assembly for hauling containers.

According to the present invention, a trailer for hauling containers according to the preamble defined above is provided, wherein the conveyor system comprises a load bearing surface positioned above an upper surface of the tipping frame, the load bearing surface being arranged at a fixed (stationary) position along a predetermined length at the rear zone of the tipping frame and being arranged to convey the container while under load without bending in a load direction. This allows to effectively load and unload a container on the trailer assembly, without the need of external equipment such as a hoist installation. A container is supported during on and off loading, and also during actual transport over an extended load bearing surface, making handling of the container more secure.

Further advantageous embodiments of the present invention are described in the dependent claims as attached, and described in the detailed description below.

### Short description of drawings

The present invention will be explained in further detail hereinafter based on a number of exemplary embodiments with reference to the drawings, wherein:
Fig. 1 is a side view of an embodiment of a trailer assembly according to the present invention.
Fig. 2 is a side view of a another embodiment of a trailer assembly according to the present invention.
Fig. 3 is a side view of a chain conveyor as used in embodiments of the present invention.
Fig. 4a is a partial top view of a tipping frame as used in embodiments of the present invention.
Fig. 4b is a cross sectional view of the tipping frame of Fig. 4a.
Fig. 5a and 5b are side views of links used in an embodiment of the present invention.
Fig. 6a and 6b are side views two connected links as shown in Fig. 5a and 5b.
Fig. 7a and 7b are three dimensional partial views of an embodiment of a chain conveyor as used according to the present invention.
Fig. 8 is a side view of a further embodiment of a chain conveyor as used according to the present invention.
Fig. 9a and 9b are cross sectional views of an embodiment of a tipping frame according to the present invention.
Fig. 9c is a cross sectional view perpendicular to the view of Fig. 9b.
Fig. 10 is a side view of a braking system according to an embodiment of the present invention.
Fig. 11 is a side view of a braking system according to a further embodiment of the present invention.
Fig. 12 is a side view of a braking system according an even further embodiment of the present invention.

### Detailed description of exemplary embodiments

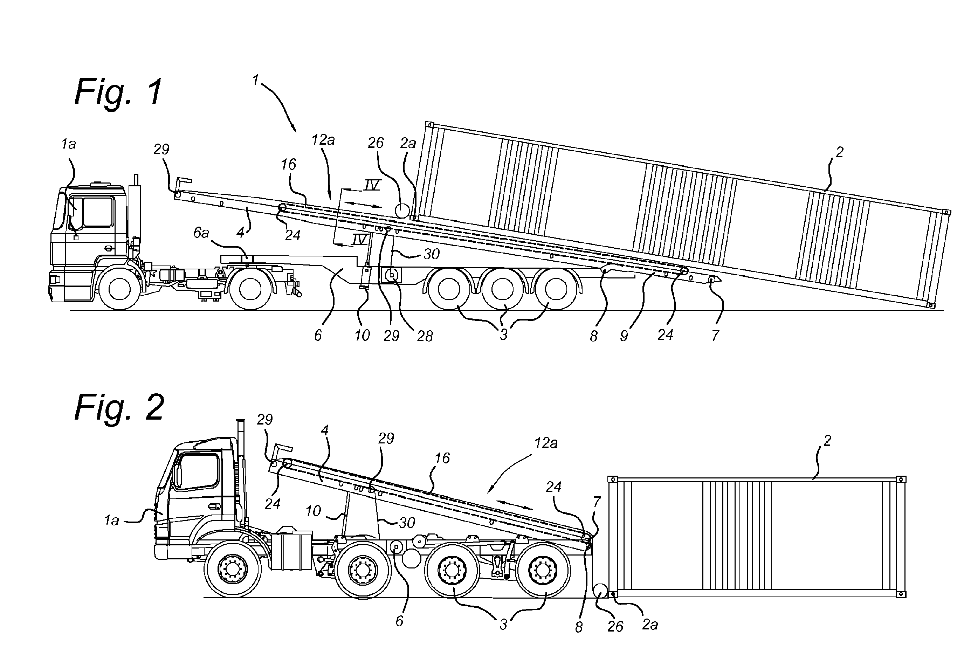

Referring to the drawings, Fig. 1 shows a side view of a first embodiment of a trailer or trailer assembly 1 for hauling containers 2 according to the present invention.

The trailer assembly 1 comprises a trailer frame 6 provided with a plurality of wheel axles 3 supporting the trailer 1. In the embodiment shown, the trailer 1 is provided with three wheel axles 3, but the trailer 1 may also be provided with less or more wheel axles 3. The trailer frame 6 comprises a front zone having a trailer coupler 6a for connecting the trailer assembly 1 to a tractor unit 1a, such as a truck or any other vehicles capable of transporting the trailer 1.

The trailer 1 further comprises a tipping frame 4 rotatably connected to the trailer frame 6 by means of a hinge element 8 at a rear zone of the trailer 1. A tipping actuator 10 is connected to the trailer frame 6 and the tipping frame 4 for rotation of the tipping frame 4 along an axis of the hinge element 8. The tipping actuator 10 is arranged to rotate the tipping frame 4 from a substantially horizontal position (parallel to the main frame 6) to an inclined position relative to the trailer frame 6. The rear zone of the trailer frame 6 comprises an overhang part 9 extending backwards from the location of the hinge element 8 to facilitate moving the container 2 onto or from the trailer 1 in the inclined position. The tipping frame 4 comprises a rear roller 7 at a rear end arranged to support the container 2 in the inclined position while moving the container 2 onto or from the trailer 1. The rear roller 7 further prevents any damage to the container 2 and/or the tipping frame 4 as no abrasive sliding occurs.

In an embodiment, the tipping actuator 10 is a powerful hydraulic system comprising a cylinder, a plunger, and a hydraulic fluid moving the plunger. In another embodiment, the tipping actuator 10 can be envisaged as an electro-mechanical mechanism or a pneumatic system depending on e.g. the size and weight of the container 2.

The tipping frame 4 further comprises a conveyor system 12a disposed substantially parallel to the tipping frame 4 as shown in Fig. 1 for moving the container 2 along a length of the tipping frame 4. The at least one conveyor system 12 defines a load bearing surface 16 capable of supporting the load of the container 2 and of moving the container 2 onto or from the trailer 1.

The load bearing surface 16 is positioned above an upper surface of the tipping frame 4, and the load bearing surface 16 is arranged at a fixed (i.e. stationary) position along a predetermined length at the rear zone of the tipping frame 4. Furthermore, the load bearing surface 16 is arranged to convey the container 2 while under load without bending in a load direction, i.e. the bearing surface 16 supports a load of the container along the predetermined length, and due to its rigidity in the load direction sufficient grip is obtained to convey a heavy load along the tipping frame 4.

The embodiment of the trailer 1 shown in Fig. 1 further comprises a loading actuator for moving a container onto or from the trailer 1. In a preferred embodiment, the loading actuator comprises a coupler element 26 connectable to the container 2 (see also international patent publication WO10/041946, incorporated herein by reference, for a more detailed description thereof) and a winch 28 connected to the trailer frame 4. The winch 28 is provided with a pulling element (e.g. a belt or cable) 30 which is connected to the coupler element 26. Furthermore, a plurality of pulleys 29 are provided and arranged to guide the belt 30 along the tipping frame 4. The coupler element 26 connects to a container 2 by means of standardized corner castings 2a, wherein the width of the coupler element 26 is adjustable for handling a variety of containers 2. The winch 28 is adapted to shorten or lengthen the belt 30 for moving a container 2 onto or from the trailer 1 respectively. Thus coupler element 26 and winch 28 assembly is not present in each embodiment of the present invention, also other pulling arrangements can be envisaged: E.g. the trailer 1 may be pushed under the container 2 in the tilting position of the tipping frame 4, in which case the (moveable) load bearing surface 16 of the conveyor system 12a allows to shift the container 2 onto or off the trailer 1. Also other hoisting mechanisms may be used instead of the coupler element 26 and winch 28, e.g. a hoisting installation using direct cables and hooks that can be attached to the container 2.

Fig. 2 shows a side view of a second embodiment of a trailer assembly 1 for hauling containers according to the present invention. In this embodiment, the trailer assembly 1 comprises a trailer frame 6 provided with a plurality of wheels 3 supporting the trailer assembly 1. The trailer frame 6 comprises a front zone rigidly attached to the tractor unit 1a, in other words, the trailer assembly 1 is an integral part of the tractor unit 1a, e.g. a truck with a fixed trailer.

The front zone of the trailer frame 6 of the present invention is said to be connectable to the tractor unit 1a in broad sense, i.e. by means of the trailer coupler 6a as depicted in Fig. 1 or by means of a rigid connection as shown in Fig. 2.

The embodiment of the tipping frame 4 shown in Fig. 2 comprises all the features already explained for the tipping frame 4 in Fig. 1, except for the following: The tipping frame 4 is shorter than in the Fig. 1 embodiment, to allow e.g. a 20 foot container 2 instead of a 40 foot container 2. In both the Fig. 1 and Fig. 2 embodiments variants are included for varying sizes container 2 (e.g. 20, 30, 40 or 45 ft container 2). In more general terms, the present invention embodiments of the trailer assembly are useable in combination with a variety of containers 2 and container like units 2, which are e.g. provided with corner castings 2a, such as (but not limited to) platform units, covered units, side board units, bulk tank units, rubble containers, etc.

Furthermore, the overhang part 9 rearward of the hinge element 8 is not present, so that the rear roller 7 remains higher above the ground in the inclined position. In a typical loading and offloading scenario for the container 2, the rear roller 7 supports the belt 30 when the coupler element 26 vertically lifts a side of the container 2 toward or away from the hinge element 8, and guides the belt 30 and coupler element 26 onto the tipping frame 4. The strength of the belt 30 should be sufficient to lift a fully loaded container 2. The guiding function of the rear roller 7 may also be implemented differently, e.g. as a bent plate or the like.

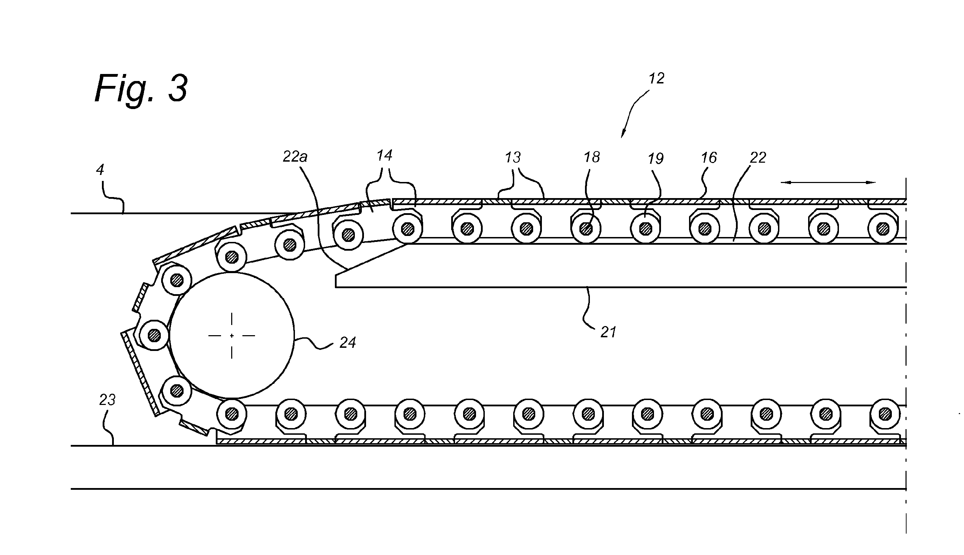

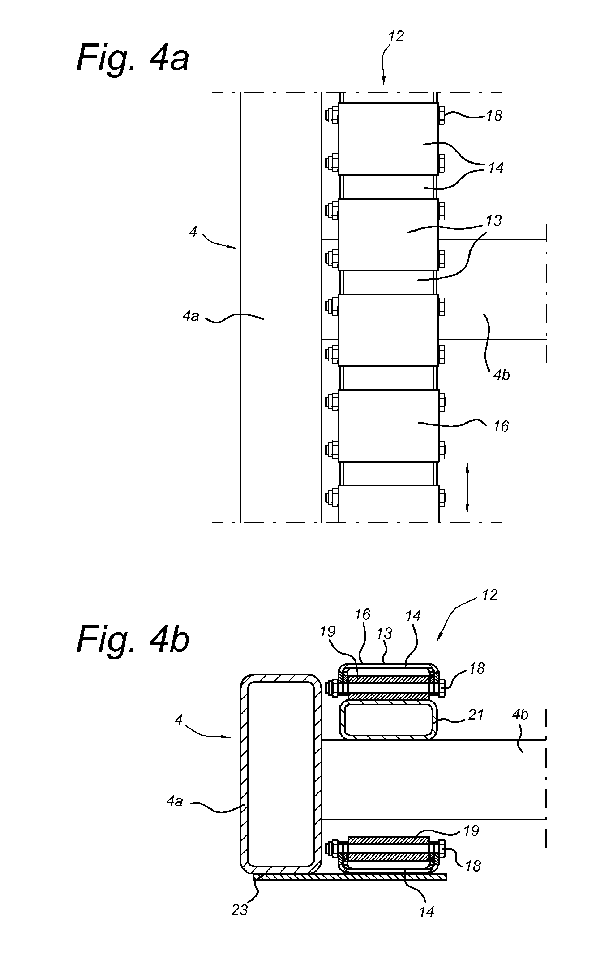

In an embodiment, the load bearing surface 16 comprises at least one chain conveyor 12 (see also the detailed description with reference to Fig. 3 and 4a, 4b below). In an exemplary embodiment, two chain conveyors 12 are provided, e.g. each alongside a longitudinal beam 4a of the tipping frame 4. Each of the at least one chain conveyor 12 comprises a plurality of connected links 14, wherein each one of the plurality of connected links 14 comprises a link load bearing surface 13, the adjoining link load bearing surfaces 13 forming the load bearing surface 16. This makes the load bearing surface 16 capable of supporting and moving a load in a load bearing position. In an embodiment (e.g. the embodiment shown in Fig. 2), the at least one chain conveyor 12 runs substantially parallel to the tipping frame 4 over a maximum length, thus providing a load bearing surface 16 having a maximum length with respect to the tipping frame 4. In another embodiment, the at least one chain conveyor 12 runs substantially parallel to the tipping frame 4 over a reduced length, thus providing a conveyor surface 16 having a reduced length with respect to the tipping frame 4, e.g. 50% of the length of the tipping frame 4. In an even further embodiment, multiple chain conveyors 12 are positioned next to each other in the longitudinal direction of the tipping frame 4, together forming a composed chain conveyor along the combined length.

As shown in the embodiments of Fig. 1 and 2, the tipping frame 4 further comprises a plurality of conveyor guides 24 at the ends of the load bearing surface 16, e.g. for each of the at least one chain conveyor 12. That is, each single chain conveyor 12 is being guided by a plurality of conveyor guides 24. In an embodiment, the tipping frame 4 comprises two conveyor guides 24 for each of the at least one chain conveyor 12, wherein each one of the plurality of conveyor guides 24 is envisaged as a substantially circular member around which the at least one chain conveyor 12 makes a 180° turn. In another embodiment, at least one of the plurality of conveyor guides 24 is moveable relative to the tipping frame 4, making it possible to minimize the slack in each of the at least one chain conveyor 12.

The trailer assembly 1 in each embodiment described can be fitted with twist locks positioned on the tipping frame 4. If the container 2 is brought into position on the trailer assembly 1 for transport, these twist locks can engage the container 2 in a locking manner, e.g. by extending the twist locks. alternatively, the conveyor system 12a is moveable, e.g. by lowering the load bearing surface 16 to the level of the tipping frame 4 or below. As a further alternative, the twist locks may be provided on the trailer frame 6, and positioned to lock a container 2 when the tipping frame 4 is returned from the inclined position to the horizontal position.

Fig. 3 shows a side view of a first embodiment of the at least one chain conveyor 12 according to the present invention. The at least one chain conveyor 12 comprises a plurality of connected links 14 each comprising a link load bearing surface 13 for supporting a load such as a container 2. As mentioned before, the conveyor surface 16 is defined as a part of the at least one chain conveyor 12 capable of supporting and moving a container 2 onto or from the trailer 1. On the basis of the embodiment in Fig. 3, the conveyor surface 16 is defined by a plurality of adjacent link load bearing surfaces 13. The at least one chain conveyor 12 further comprises a plurality of coupling elements 18 each rotatably connecting two adjoining links 14, thus two adjoining links 14 share a common coupling element 18 in a rotatable manner.

In this embodiment, the tipping frame 4 further comprises at least one conveyor support element 21 each supporting one of the at least one chain conveyor 12, wherein each conveyor support element 21 comprises a substantially flat conveyor support surface 22 which is substantially parallel to the tipping frame 4 and in contact with one of the at least one chain conveyor 12. Each of the at least one chain conveyor 12 is supported over a length equal to the length of the corresponding conveyor support surface 22 as shown in Fig. 3. As a result, a plurality of adjoining links 14 in contact with a corresponding conveyor support surface 22 are said to be in a load bearing position, and so each one of the plurality of connected links 14 comprises a load bearing surface 13 capable of supporting and moving a load in the load bearing position.

Each of the at least one conveyor support member 21 further comprises a plurality of conveyor support ramps 22a, each facilitating proper guidance of one of the at least one chain conveyor 12 toward or away from the corresponding conveyor support surface 22 towards the conveyor guides 24. In the embodiment shown, the conveyor support member 21 comprises a conveyor support ramp 22a at each opposing end.

As further shown in the embodiment of Fig. 3, each one of the plurality of coupling elements 18 comprises a roller element 19 in contact with one of the at least one conveyor support surface 22 in a load rolling position, and positioned well below the load bearing surface 16 during operation, wherein the load rolling position corresponds to the load bearing position as discussed above. The roller elements 19 significantly reduce friction and allow for a smooth movement of a load, such as a container 2, while still maintaining the function of the load bearing surface 16.

The tipping frame 4 further comprises a plurality of conveyor guides 24 for each of the at least one chain conveyor 12. In an embodiment, each one of the plurality of conveyor guides 24 is a substantially circular element around which the at least one chain conveyor makes a 180° turn. In the embodiment shown, each roller element 19 rolls over each one of the plurality of conveyor guides 24 when the at least one chain conveyor 12 travels a full round in clockwise or counter clockwise sense. In a further embodiment, the conveyor guide 24 is split into two or more parts, wherein the at least one chain conveyor 12 makes a 180° turn in combination (e.g. first 45° and then 135°).

According to the embodiment shown, the tipping frame 4 further comprises at least one conveyor protection plate 23 each covering a lower part of one of the at least one chain conveyor 12. That is, each conveyor protection plate 23 covers a lower part of one corresponding chain conveyor 12, wherein the lower part is defined by downward facing load bearing surfaces 13 of adjoining links 14.

Fig. 4a (top view) and 4b (cross sectional view) each show an embodiment of the tipping frame 4 of the present invention. Fig 4a shows a partial top view of an embodiment of the tipping frame 4 according to the present invention, wherein the tipping frame 4 comprises two parallel beams 4a connected by a plurality of cross beams 4b. The at least one chain conveyor 12 is disposed parallel to the two beams 4a.

Fig. 4a shows a plurality of adjoining links 14 and their load bearing surfaces 13, which form a substantially flat surface partially defining the conveyor surface 16, and wherein each one of a plurality of coupling elements 18 rotatably connect two adjoining links 14.

Fig. 4b shows a cross sectional view of an embodiment of the tipping frame 4 according to the present invention, wherein the cross beams 4b support the conveyor support member 21. The (optional) conveyor protection plate 23 is connected to the beam 4a and extends underneath the lower part of the chain conveyor 12. In an embodiment, the lower part of the chain conveyor 12 is in sliding contact with the conveyor protection plate 23. In another embodiment, an air gap is interposed between the lower part of the chain conveyor 12 and the conveyor protection plate 23.

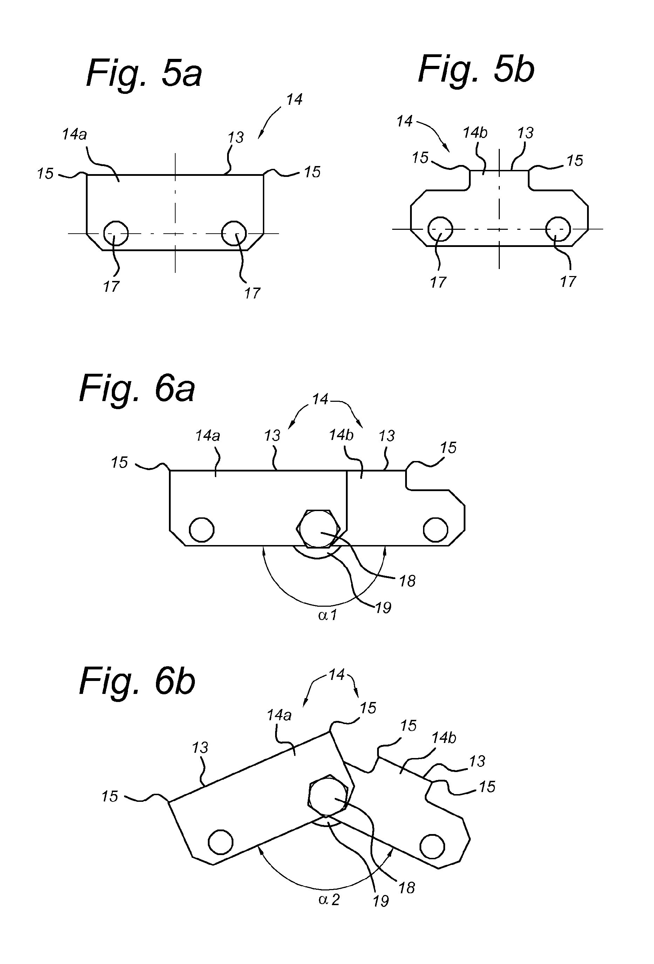

Fig. 5a and 5b each show a side view of an exemplary embodiment of an outer link 14a and an inner link 14b, respectively, of a chain conveyor 12 according to the present invention. Until now, the plurality of connected links 14 were generalised and no distinction was made between individual links 14. Although the outer link 14a and inner link 14b have different geometries, both links share common features. The outer link 14a and inner link 14b each comprise an upper left and an upper right side as shown in the drawings, wherein each side comprises an abutment face 15, substantially perpendicular to the associated link load bearing surface 13. Furthermore, the outer link 14a and inner link 14b each comprise a lower left and a lower right part as shown in the drawings, wherein each part comprises an aperture 17 extending there through.

Please note that the four designations 'upper left', 'upper right', 'lower left', and 'lower right' are defined for side views of the links 14, such as the side views shown in Fig. 5a and 5b, wherein the four designations correspond to the four quadrants defined by the horizontal and vertical dashed lines.

Fig. 6a and 6b show embodiments of two adjoining links 14 rotatably connected by the coupling element 18, wherein the two adjoining links 14 are in a first a1 and a second a2 angular position respectively. The coupling elements 18 are at a predetermined distance below the associated load bearing surface 13 to allow this angular movement between two adjoining links 14.

As shown in Fig. 6a, the abutment face 15 at the upper right side of the outer link 14a abuts the abutment face 15 at the upper left side of the adjoining inner link 14b, and wherein the load bearing surfaces 13 are substantially parallel. As a result, the two adjoining links 14, such as the outer link 14a and inner link 14b, cannot rotate beyond a substantially straight angle, i.e. 180 degrees, wherein each adjoining link 14 is capable of transferring a torque in one rotational direction only. More precisely, if the outer link 14a is clamped/fixed then the inner link 14b can only impose a counter clockwise torque on the outer link 14a. Conversely, if the inner link 14b is clamped/fixed then the outer link 14a can only impose a clockwise torque on the inner link 14b.

Fig. 6b shows the second angular position a2 between the embodiments of two adjoining links 14 such as the outer link 14a and the inner link 14b, wherein the abutment faces 15 are not in contact. As a result, the two adjoining links 14 are freely rotatable around the second angular position a2 and cannot transfer a torque.

On the basis of the link geometries just explained, it is readily understood that a plurality of adjoining links 14 in the first angular position a1 can be envisaged as a rigid beam capable of supporting a load on the load bearing surfaces 13. The at least one chain conveyor 12 of the present invention is therefore capable of forming a substantially rigid beam in one direction for those adjoining links 14 that are in the first angular position a1.

In one specific embodiment, the abutment faces 15 of a single link 14 may be positioned closer to one another, as a result of which the resulting chain conveyor 12 itself has flexibility not only in the load direction, but up to a certain extent also in the opposite direction. In this specific embodiment, the conveyor support surface 22 ensures that during operation the load bearing surface 16 (as combination of link load bearing surfaces 13) is still arranged to convey the container while under load without bending in a load direction.

In an even further embodiment, the load bearing surface 16 is formed by structural parts of the at least one chain conveyor 12. In a very simple embodiment, a normal chain is used as chain conveyor 12, having a plurality of chain elements. The load bearing surface 16 is then formed by the top rims of the chain elements, and the load is transferred to the tipping frame 4 using roller elements 19 in combination with a suitable rail element on the tipping frame, e.g. on the conveyor support member 21 (see e.g. embodiment of Fig. 4b). The roller elements 19 in this case are positioned within the chain elements, i.e. the roller elements 19 in this embodiment don't extend from the chain conveyor 12 at all. In an even further variant, a regular chain is provided with additional load bearing element, e.g. attached to the coupling elements 18 of each link 14. The additional load bearing elements may then form the load bearing surface 16 of the at least one chain conveyor 12, and each may be of various shapes extending above and/or sideways from the at least one chain conveyor 12.

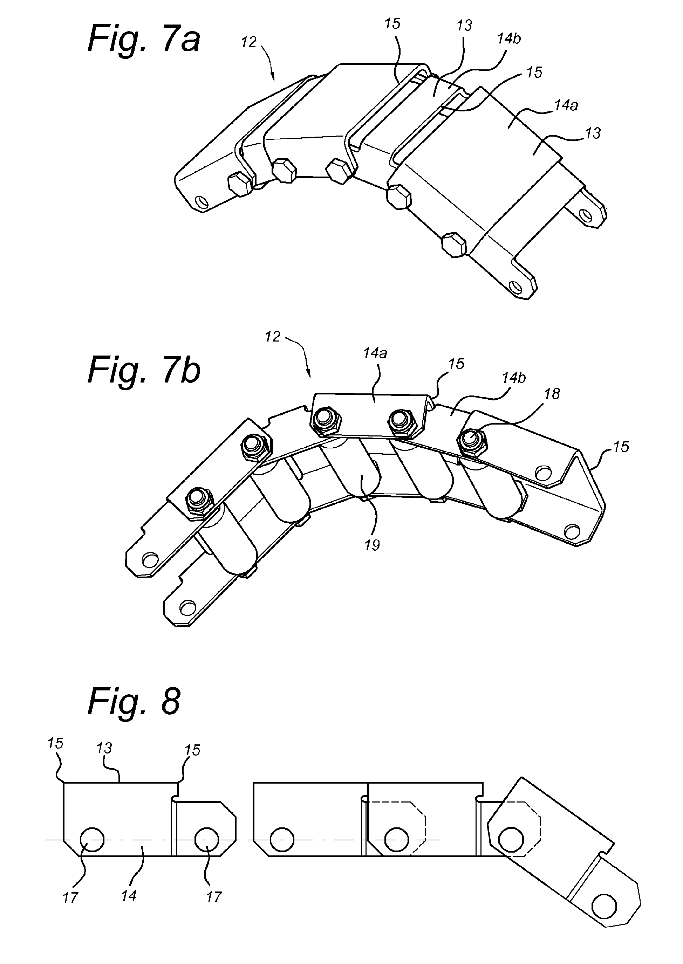

Fig 7 a and 7b each show a three dimensional partial view of an embodiment of a chain conveyor 12 of the present invention, wherein an outer link 14a and an inner link 14b are U-shaped components, and wherein the inner link 14b has a smaller width than the outer link 14a. It is readily observed that the abutment faces 15 prevent the adjoining links 14 from rotating beyond 180 degrees.

Fig. 8 shows an embodiment of a chain conveyor 12 according to the present invention, wherein the links 14 have identical geometries. Each link comprises an abutment face 15 at an upper left and an upper right side, and wherein a lower left and a lower right part comprises an aperture 17 extending there through.

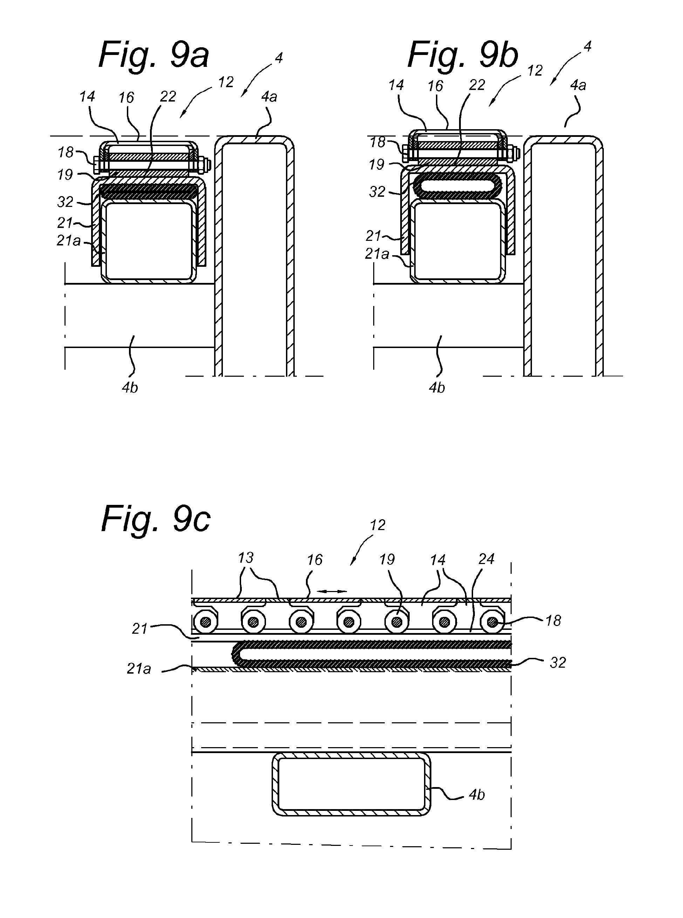

Fig 9a and 9b each show a cross sectional view of an embodiment of a tipping frame 4 of the present invention, wherein the load bearing surface 16 formed by the chain conveyor 12 is adjustable in height with respect to the tipping frame 4. The tipping frame 4 again comprises two parallel beams 4a connected by a plurality of cross beams 4b. An adjustable U-shaped conveyor support element 21 comprises a conveyor support surface 22 and is disposed parallel to the beams 4a. An expandable (e.g. inflatable) element 32 is provided interposed between an inner conveyor support member 21a and the U-shaped conveyor support member 21. The inner conveyor support member 21a is supported by the cross beams 4b.

Fig 9a shows an embodiment of a tipping frame 4 wherein the expandable element 32 is in its smallest shape (deflated in case of an inflatable element 32) and the conveyor support surface 22 is in a lowered position relative to the tipping frame 4. As a result, the conveyor surface 16 is in a lowered or sunken position relative to the tipping frame 4. When a container 2 is loaded, this allows the container 2 to rest on the tipping frame 4, i.e. one the beams 4a. Also, when no load is present, the conveyor system 12a (i.e. the chain conveyors 12) may be sunken between the surface of the tipping frame 4, protected against damage from external circumstances.

Fig 9b shows an embodiment of a tipping frame 4 wherein the expandable element 32 is in its extended shape (inflated) and the conveyor support surface 22 is in a raised position relative to the tipping frame 4. As a result, the conveyor surface 16 is in a raised position relative to the tipping frame 4, so that the container 2 rests on the chain conveyor 12.

Fig. 9c shows a cross section of the embodiment, perpendicular to the vies of Fig. 9a and 9b, wherein the chain conveyor 12 rests on the conveyor support surface 22 of the conveyor support element 21. In an embodiment, the inflatable element 32 is an elongated inflatable tube enclosed by the U-shaped conveyor support element 21 and the inner conveyor support element 21a.

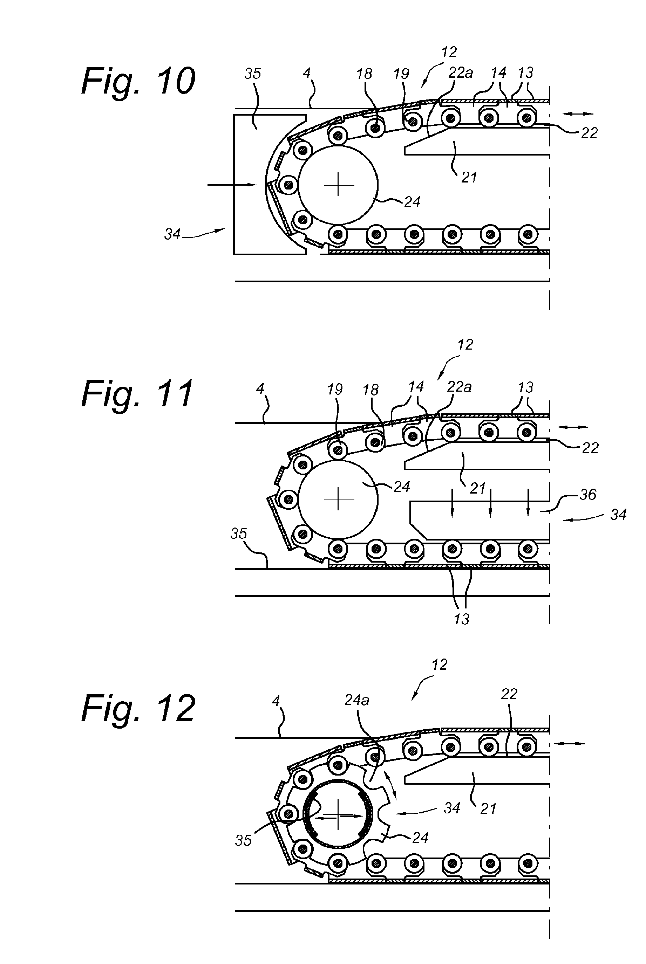

Fig 10, 11, and 12 each show an embodiment of a brake system 34 arranged for immobilizing each of the at least one chain conveyor 12 in a braking condition. The brake system 34 is in operative engagement with each of the at least one chain conveyor 12, to prevent the load bearing surface 16 from moving (braking or locking action), e.g. during actual transport by the truck 1a.

Fig. 10 shows a side view of an embodiment of a brake system 34 according to the present invention, wherein the brake system 34 comprises at least one brake pad 35 for each of the at least one chain conveyor 12. Each brake pad 35 slidingly engages a number of adjoining links 14 of a corresponding chain conveyor 12 in a braking condition, thereby immobilizing the corresponding chain conveyor 12.

Fig. 11 shows a side view of a further embodiment of a brake system 34 according to the present invention, wherein the brake system 34 comprises at least one brake actuator 36 for each of the at least one chain conveyor 12. In the embodiment shown, each brake actuator 36 engages a number of roller elements 19 of a corresponding chain conveyor 12 in a braking condition. As a result a number of load bearing surfaces 13 of the links 14 are then in sliding engagement with a brake pad 35 mounted on or integrated with the tipping frame 4 (or part of/ integrated with the conveyor protection plate 23, see Fig. 4b), thereby immobilizing the corresponding chain conveyor 12.

Fig. 12 shows a side view of yet a further embodiment of a brake system 34 according to the present invention, wherein the brake system 34 uses the at least one rotatable conveyor guide 24 for each of the at least one chain conveyor 12. The at least one conveyor guide 24 comprises regularly spaced recesses 24a for receiving the roller elements 19 and/or linking elements 18. A brake pad 35 slidingly engages with an inner surface of the rotatable conveyor guide 24 in a braking condition, thereby immobilizing the chain conveyor 12. Alternatively, a brake pad 35 slidingly engages with a surface of a disc mounted on the rotatable conveyor guide 24 in a braking condition, thereby immobilizing the chain conveyor 12.

It will be clear that further alternative embodiments may be envisaged for braking or locking the chain conveyors 12 in the various embodiments of the present inventions as described above. E.g. a simple locking mechanism may be used which interlocks the chain conveyor 12 with the tipping frame 4.

Also, the actuation of the brake system 34 may be implemented using various different variants, e.g. using cam surface systems, lever based systems and hydraulic/pneumatic actuated systems (using piston/cylinder elements, or e.g. using air inflated tubes or cushions).

In even further embodiments , the trailer 1 according to the present invention may comprise a drive system arranged for driving each of the at least one chain conveyor 12. This allows to convey the container 2 during on or off loading independently, or in combination with the loading actuator 26, 28 (allow a winch 28 with less capacity).

The present invention embodiments have been described above with reference to a number of exemplary embodiments as shown in the drawings. Modifications and alternative implementations of some parts or elements are possible, and are included in the scope of protection as defined in the appended claims.

## Claims

1. Trailer assembly for transport of a container (2), the trailer comprising a trailer frame (6), a tipping frame (4) connected to the trailer frame (6) with a hinge element (8) at a rear zone of the trailer frame (6), and a tipping actuator (10) connected to the trailer frame (6) and the tipping frame (4) for tilting the tipping frame (4) between a horizontal position and an inclined position, the tipping frame (4) comprising a conveyor system (12a) for moving the container (2) along a length of the tipping frame (4),
wherein the conveyor system (12a) comprises a load bearing surface (16) positioned above an upper surface of the tipping frame (4), the load bearing surface (16) being arranged at a fixed position along a predetermined length at the rear zone of the tipping frame (4) and being arranged to convey the container (2) while under load without bending in a load direction.

2. Trailer assembly according to claim 1, wherein the load bearing surface (16) comprises at least one chain conveyor (12),
wherein each of the at least one chain conveyor (12) comprises a plurality of connected links (14), wherein each one of the plurality of connected links (14) comprises a link load bearing surface (13), the adjoining link load bearing surfaces (13) forming the load bearing surface (16).

3. Trailer assembly according to claim 2, wherein the at least one chain conveyor (12) further comprises a plurality of coupling elements (18) each rotatably connecting two adjoining links (14).

4. Trailer assembly according to claim 3, wherein each one of the plurality of connected links (14) comprises an abutment face (15) on each side, substantially perpendicular to the associated link load bearing surface (13), and the plurality of coupling elements (18) are at a predetermined distance below the associated load bearing surface (13).

5. Trailer assembly according to any one of claims 2-4, wherein the tipping frame (4) comprises at least one conveyor support (21) having a surface (22) in contact with the least one chain conveyor (12).

6. Trailer assembly according to claim 5, wherein each one of the plurality of coupling elements (18) comprises a roller element (19) in contact with the at least one conveyor support surface (22) and positioned below the load bearing surface (16).

7. Trailer assembly according to claim 5 or 6, wherein the tipping frame (4) further comprises an expandable element (32) positioned between the conveyor support element (21) and the tipping frame (4).

8. Trailer assembly according to any one of claims 1-7, wherein the tipping frame (4) comprises a plurality of conveyor guides (24) at the ends of the load bearing surface (16).

9. Trailer assembly according to any one of claims 1-8, wherein the tipping frame (4) extends beyond the hinge element (8).

10. Trailer assembly according to any one of claim 1-8, wherein the tipping frame (4) has an end side substantially at the hinge element (8).

11. Trailer assembly according to any one of claims 1-10, wherein the load bearing surface (16) is provided along a part of the tipping frame (4).

12. Trailer assembly according to any one of claims 1-11, wherein the conveyor system (12a) comprises a coupler element (26) which is arranged to connect with the container (2), and a winch (28) connectable to the coupler element (26).

13. Trailer assembly according to any one claims 1-12, further comprising a brake system (34) in operative engagement with each of the at least one chain conveyor (12).

14. Trailer assembly according to any one of claims 1-13, further comprising a drive system arranged for driving each of the at least one chain conveyor (12).

15. Truck comprising a trailer assembly according to any one of claims 1-14, wherein the trailer assembly (1) is an integral part of the truck.
